# EUROPEAN PATENT SPECIFICATION

(11) **EP 4 366 890 B1**
(45) Date of publication and mention of the grant of the patent: **09.04.2025**
(21) Application number: 22741555.1
(22) Date of filing: 01.07.2022
(51) Int. Cl.: B07B 1/18, B07B 1/46, B07B 1/54, B07B 1/22, B07B 1/28, B07B 1/42, B08B 7/02, B08B 9/00, B08B 9/08, B65G 11/20, B01J 2/12

(54) **MATERIAL HANDLING, RELATED METHOD OF HANDLING AND/OR TRANSPORTATION AND RELATED PROCESS**
MATERIALHANDHABUNG, ZUGEHÖRIGES VERFAHREN ZUR HANDHABUNG UND/ODER ZUM TRANSPORT UND ZUGEHÖRIGES VERFAHREN
MANIPULATION DE MATÉRIAU, PROCÉDÉ APPARENTÉ DE MANIPULATION ET/OU DE TRANSPORT ET PROCESSUS APPARENTÉ

(30) Priority: 05.07.2021 GB 202109712
(43) Date of publication of application: 15.05.2024
(73) Proprietor: O.C.O. Technology Group Limited, Chatham, Kent ME4 4QU (GB)
(72) Inventor: BISSETT, Thomas, Chatham Maritime Kent ME4 4QU (GB); GUNNING, Peter, Chatham Maritime Kent ME4 4QU (GB)
(74) Representative: HGF
(86) International application number: PCT/GB2022/051694
(87) International publication number: WO 2023/281244

(56) References cited:
- CN-U- 204 564 246
- CN-U- 206 103 873
- CN-U- 213 001 059
- CN-U- 213 001 059
- KR-A- 20140 041 174
- KR-A- 20190 000 672
- KR-A- 20190 000 672
- US-A- 2 478 246
- US-A- 2 478 246
- US-A- 2 812 541
- US-A- 2 812 541

## Description

### FIELD OF THE INVENTION

The present invention relates to material handling. In particular, it relates to bulk material handling and to self-cleaning or continuously-cleaning bulk material handling apparatus and methods.

### BACKGROUND

Bulk material handling apparatus such as silos, hoppers, chutes, drums, conveyors, and so on, invariably suffer from accumulation of the bulk material being handled that progressively reduces their effectiveness. This is particularly the case with bulk materials which tend to agglomerate under certain conditions. One example of such materials includes cementitious materials which may become adhesive to the apparatus under certain conditions of moisture or atmospheric humidity. In the context of the present invention, the term 'accumulate' and its derivative terms are intended to encompass material agglomeration and other adhesive materials and processes, including lamination of material to apparatus surfaces.

With accumulation of material on apparatus surfaces, both short-term and long-term efficiency is compromised, with the flow of material along or through the apparatus being restricted or stopped completely, and the capacity and throughput of the apparatus reduced. Additionally, accumulation causes increased stresses on walls and bearings of the apparatus as the mass of material increases, reducing the lifespan of the apparatus, increasing maintenance requirements, and can reduce energy efficiency.

Accumulation may be affected by the design of the apparatus, or by the properties of the bulk material being handled. Some bulk materials are heavily prone to adhesion and accumulation on surfaces and are difficult to handle. Therefore, suitable methods of cleaning are required.

Common methods of cleaning include vibrators, air cannons, aeration pads, and scrapers. These are effective, but often require a significant amount of energy, and may result in gradual damage to the device.

Rotary drums can be used for a variety of purposes, including rotary drying and cooling, granulation, cleaning, or coating and can be used to achieve many goals across numerous industries and for a wide range of materials, particularly bulk materials. Specific, but nonlimiting, example applications include agriculture (such as processing of manure, compost or NPK fertiliser), metallurgy (such as metal ore processing), minerals (such as limestone dust or mine tailings), pharmaceuticals (such as tablet coating), waste processing (for example, gas cleaning residues), manufactured aggregate production and food (such as sugar).

Rotary drums are versatile and reliable but may incur issues when handling more difficult bulk materials. Build-up can occur as material adheres to itself and to the wall of the drum. Scrapers acting on the interior of the drum are commonly employed, but the rotation of the drum may be adversely affected when the scraper comes into contact with a large, built-up mass of material. This may also affect the quality of the material being processed. Equally, wear upon the drum and the scraper itself may be an issue.

It is with these problems in mind that the present invention has been devised.

The document US2812541 A discloses a material handling system in accordance with the preamble of claim 1.

### SUMMARY OF THE INVENTION

In its broadest sense, the present invention is defined by the material handling system of claim 1, which provides a material handling system comprising a rigid frame and a moveable liner, wherein the frame includes at least one aperture having an area and wherein the system comprises an actuator system for applying a force to a surface of the liner in the area of the aperture.

In the context of the present invention, the term 'cleaning' is not limited to complete removal of material and includes reduction in the amount of material accumulated to the apparatus. In general, the invention concerns the transport and/or handling of a solid material. The solid material may be in the form of particles and/or aggregates (e.g. agglomerates formed from a mass of fragments or particles compacted together).

The invention also provides, in accordance with claim 14, a method of handling and/or transporting a material with a material handling system as defined in claim 1. The method comprises: (i) depositing the material onto a surface of a moveable liner and (ii) applying a force to a surface of the moveable liner to reduce or prevent accumulation (e.g. permanent accumulation) of the material on the surface of the moveable liner. The method may be performed with the material handling system of the invention.

Further aspects of the disclosure relate to a pellet and to a process for the preparation of one or more of the pellets.

The invention provides, in accordance with claim 15, a process for the preparation of one or more pellets using a material handling system as defined in claim 1. The process comprises: mixing fine particulates and a binder in a rotatable drum of a material handling system in accordance with the invention to form one or more pellets, wherein a force is applied to a surface of a moveable liner of the material handling system during the mixing of the fine particulates and the binder to reduce or prevent accumulation (e.g. permanent accumulation) thereof on the surface of the moveable liner.

Also provided by the disclosure is a pellet. The pellet is, for example, for use as a construction material (e.g. a construction aggregate). The pellet is obtained or is obtainable (e.g. directly obtained or obtainable) by the process of the invention. The pellet comprises, or consists essentially of, fine particulates and a binder in the form of an aggregate. The pellet is preferably a spheroidal pellet or a nodular pellet.

The invention manufactures pellets of enhanced quality due having a constantly clean drum surface that ensures efficient flow or tumbling of the agglomerating mass which is not disrupted by accumulation. The resulting pellets are therefore well formed and mechanically resilient.

Typically, the movable liner is a flexible liner, optionally an elastomeric or rubber liner. Alternatively, the moveable liner comprises a rigid or resilient member. The rigid or resilient member may be flexibly or elastically mounted to the frame.

In accordance with the invention, the liner provides a continuous surface for transporting and/handling the material. The continuous surface does not include one of more apertures, e.g. for particles and/or agglomerates of the material to pass through the liner. The purpose of the liner is to transport the material through the system. The liner is not for sorting or sieving particles and/or agglomerates of the material based on their size.

It is generally preferred that the liner is not, or does not comprise, a mesh.

Preferably, the actuator system applies a force to the liner. The force is for reducing or preventing the accumulation (e.g. permanent accumulation) of the material on a surface of the liner. For example, the force can dislodge and/or remove material that has adhered to the surface of the liner.

Typically, the force applied to the liner is substantially perpendicular to a surface of the liner.

The liner may have an internal or first surface for supporting and/or transporting the material. The liner may also have an outer or second surface. The outer or second surface may be on the opposite side of the liner to the internal or first surface of the liner.

It is preferred that the actuator system applies a force at an outer or second surface of the liner, such as in an area of an aperture of the frame.

The actuator system may apply a force to the liner externally of the rigid frame.

The or each aperture of the frame provides an area where the actuator system can apply a force to a surface of the liner.

Typically, the force applied to the liner is a tapping force. The tapping force may be applied to the liner at a regular frequency or intermittently, preferably the tapping force is applied to the liner at a regular frequency. The frequency may be synchronized with the rotation speed of the frame. The tapping force is for reducing or preventing the accumulation (e.g. permanent accumulation) of the material on a surface of the liner.

The actuator system may comprise a rotatable shaft having at least one actuator arm mounted e.g. radially thereto. It is preferred that the rotatable shaft has a plurality of actuator arms, where each actuator arm is mounted radially to the rotatable shaft.

In general, the or each actuator arm is arranged to bear against the liner, particularly the moveable liner. The or each actuator arm may be arranged to bear against an outer or second surface of the liner.

The system may further comprise a prime mover for rotating the rotatable shaft. The prime mover may be an electric, pneumatic or hydraulic motor, which may further optionally comprise at least one of a belt drive, chain drive and gearing assembly.

Typically, the actuator system comprises at least one actuator arm pivotally mounted adjacent an area of an aperture. When the actuator system comprises a plurality of actuator arms, then the plurality or a subset of the plurality of actuator arms may be pivotally mounted adjacent the area of an aperture.

The or each actuator arm may comprise a distally-mounted wheel or roller.

Typically, at least one of the actuator arms or each actuator arm may be cranked or bent. The or each actuator arm is attached at a right angle to the rotatable shaft.

In accordance with the invention, the material handling system includes an inclination adjustment system for adjusting the angle. The inclination adjustment system is for adjusting the angle of the rigid frame and/or the moveable liner to the ground.

The actuator system may comprise at least one linear actuator adapted to bear against the moveable liner. The actuator system may comprise a plurality of linear actuators, wherein each actuator is adapted to bear against the moveable liner.

Advantageously, the system further comprises load cells for weighing material in or passing through the system. The load cells can be used to help determine the weight of material in or flowing through the system.

In a first embodiment, the rigid frame is in the form of a rotatable drum.

Typically, the rotatable drum has a longitudinal axis of rotation. The axis of rotation may be inclined to the horizontal up to an angle of about 30°; such as at an angle of from 0° (e.g. greater than 0°, such as 5°) to about 30°; preferably up to about 10°, such as from about 0° (e.g. greater than 0°, such as 5°) to about 10°.

In a second embodiment, the rigid frame is in the form of a hopper or chute. For example, the rigid frame may be a frame supporting a conveyor belt.

In the pellet and the process for the preparation of one or more of the pellets, the fine particulates may be particulates of waste (e.g. inert waste or mineral waste) or particulates of minerals. For example, the fine particulates may be mineral wastes from quarrying and mining, processed mineral-derived products such cement and lime, and industrial residues such as combustion or energy recovery processes, metallurgical processes, and processed mineral products.

### BRIEF DESCRIPTION OF THE FIGURES

The above and other aspects of the present invention will now be described in further detail, by way of example only, with reference to the accompanying drawings, in which:
Figure 1 shows, schematically, in a side view and an end view, aspects of a first embodiment of an apparatus in accordance with the present invention, in the form of a rotatable drum;
Figure 2 shows, schematically, in a side view and a face view, aspects of a second embodiment of an apparatus in accordance with the present invention, in the form of a hopper or chute;
Figure 3 shows, schematically, aspects of a mechanism of an apparatus in accordance with the present invention; and
Figure 4 shows, schematically, in a side view and an end view, a third embodiment of an apparatus in accordance with the present invention.

### DETAILED DESCRIPTION

The apparatus of the present invention may, itself, may be static, such as a chute or hopper, having an ancillary source of deformation; or may be dynamic, such as a rotatable drum or conveyor and include an active source inducing deformation e.g., a rotating vessel with weighted rollers acting upon the deformable liner. Examples will be discussed below.

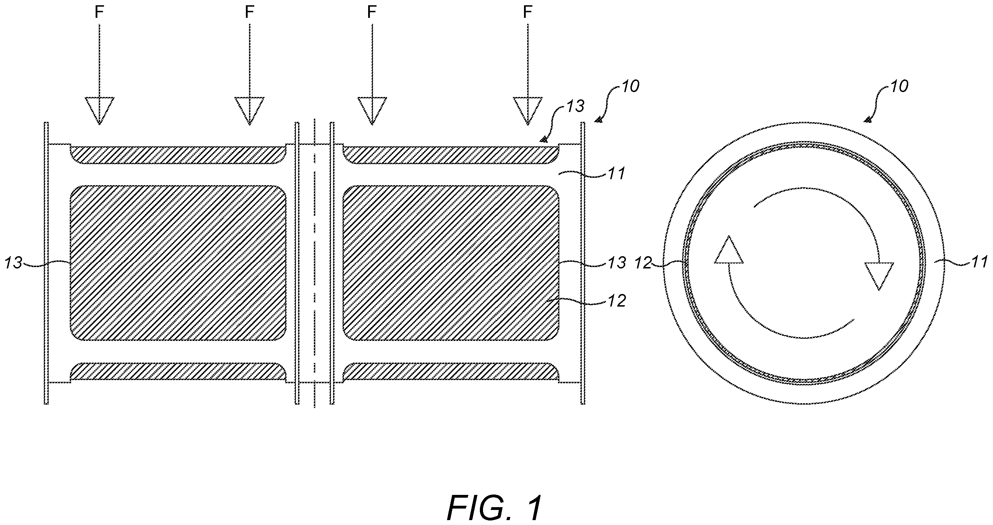

Figure 1 shows, schematically, a rotatable drum 10 of the type which is typically used in material handling processes, to tumble aggregates or other materials with compositions for coating the materials. Conventional drums commonly suffer from accumulation of material on the inner surfaces of the drum, especially in respect of materials which are adhesive or develop adhesive properties under the conditions under which the drum operates, such as humidity. The present invention seeks to address this problem by providing a drum 10 having a rigid frame 11 forming a supporting structure for a flexible liner 12.

In general, frame 11 includes at least one aperture 13 such that a force or forces F can be applied to an outer surface of flexible liner 12 through aperture 13 from an actuator mechanism (not shown in Figure 1) externally of the drum 10. Deformation of the liner 12 in reaction to the applied force F causes at least a portion of any material which has adhered to the inner surface of the liner 12 to become detached from the liner.

The flexible liner 12 is suitably formed of rubber. The liner 12 is fixed to the frame 11 to prevent slipping or axial or lateral movement. The apertures 13 in the frame 11 expose the liner 12. A force F is then applied to the exposed areas of the liner to induce flexure.

The drum illustrated in Figure 1 is suitably of the type of rotating drum 10 used for the purposes of pelletising, granulation, drying or cooling.

Frame 11 is typically mounted on wheels or rollers which are directly or indirectly driven by a motor to cause rotation of the frame and thus any material retained within the liner 12. Material is fed into an inlet end of the drum 10, and transits through the drum by the action of gravity, exiting the drum 10 at the opposite, outlet end.

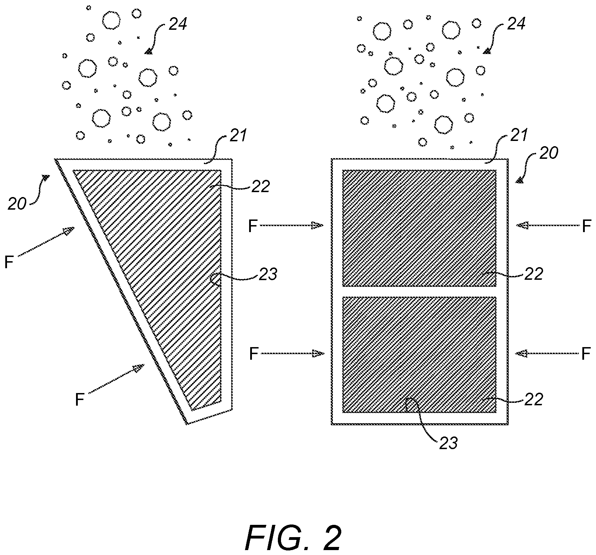

Figure 2 shows, in side and front views, an embodiment of the apparatus of the present invention in the form of a hopper 20, of the type which may be used for the storage or collection of material, or a chute, such as may be used for transfer of bulk material 24 from one location to another.

Generally, the hopper has a rigid frame 21 having apertures 23 and is lined by a flexible liner 22. Liner 22 may be formed as a single component or with an individual sheet associated with each surface of the hopper. A force F may be applied to the liner 22 through the apertures 23 in frame 21. Walls of the hopper or chute may be planar, as shown, or any suitable shape.

In modifications to the use of a flexible liner as described above, the apparatus of the present invention may use a rigid liner, flexibly mounted to frame 11, 21, for example by means of a flexible gusset or bellows-type arrangement or other connection means. In such embodiments, the liner is caused to move with respect to its rest configuration by the actuator mechanism rather than by flexing of the liner.

Deformation or movement of the liner 12,22 may be achieved by any suitable means, as will be within the routine skill, knowledge, and experience of the skilled person, and may include the use of springs or pneumatic, hydraulic, or electrically-powered actuators.

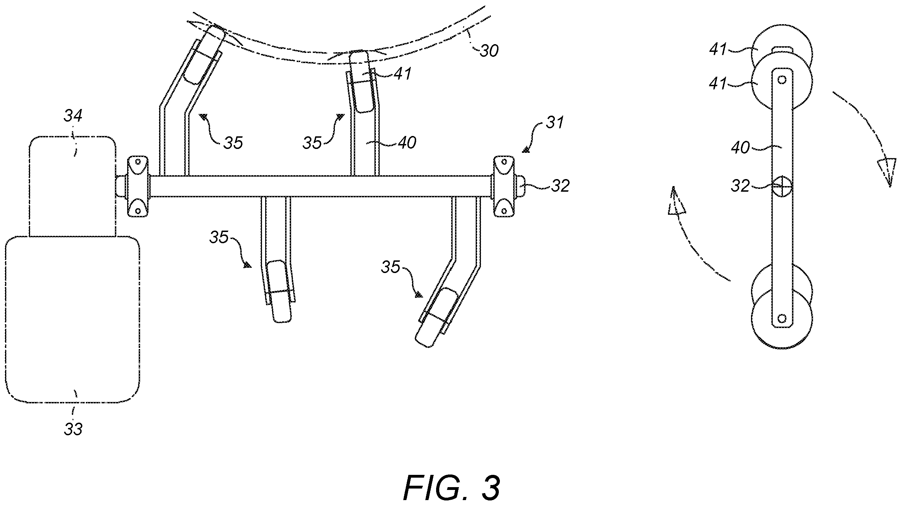

Figure 3 illustrates, partially, an example of a chute or hopper having a flexible liner 30. The chute is fitted with an exemplary actuator 31.

As a general feature of the invention, actuator 31 may have a shaft 32 driven by means of a prime mover, such as an electric or hydraulic motor 33 and, optionally, an intervening gear, chain, or belt drive 34. Shaft 32 has a plurality of massagers 35 mounted thereto such that, as the shaft 32 rotates, massagers 35 also rotated and, in doing so, press against an outer surface of liner 30, correspondingly causing inner surface of the liner to deform and eject any material adhering to the inner surface.

Each massager 35 may be in the form of an elongate actuator arm 40 mounted at a proximal end to the shaft 32 and provided with a wheel or roller 41 at its distal end (as shown by the embodiment in Figure 3). Rollers 41 act to reduce frictional wearing forces between the distal end of each actuator arm 40 and the liner 30 as the shaft rotates.

The chute may have a curved profile, as, for example, shown in the embodiment of Figure 3. Each actuator arm 40 may be cranked such that the distal end of each actuator arm is substantially perpendicular with the adjacent most surface of the liner. In the context of the actuator arms 40 of Figure 3, this has the effect that the axis of rotation of each roller 41 is parallel with the adjacent most surface of the liner 30.

A plurality (e.g. four are shown in the embodiment) cranked massagers 35 is provided. The cranked massagers 35 are arranged alternately radially spaced 180° about shaft 32 such that, with rotation of the shaft, a first pair of massagers 35 simultaneously engage or beat against liner 30. As the shaft continues to rotate about its longitudinal axis, a second pair of massagers come into contact with liner 30. Alternative arrangements are equally suitable and may be selected by the skilled person having regard to the size of the apparatus, flexibility of the liner and the nature of the bulk material.

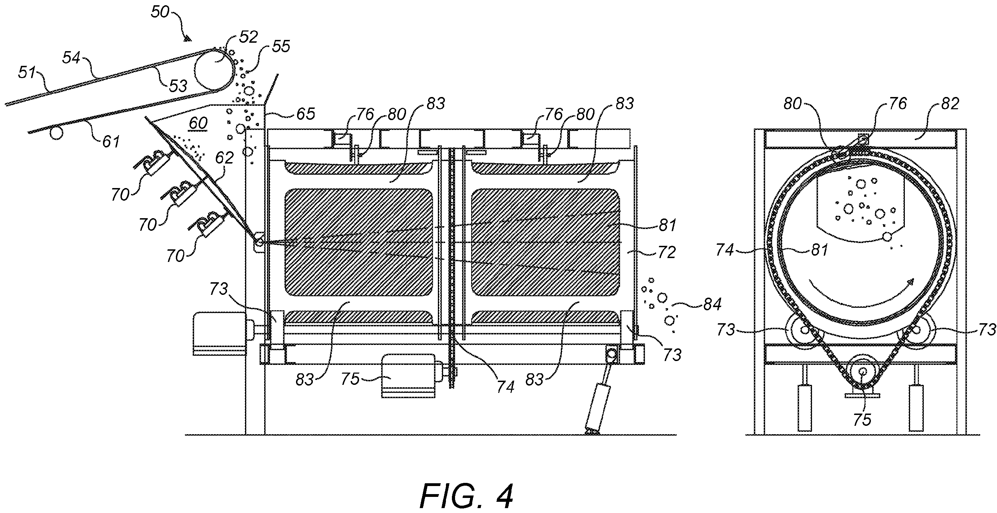

Figure 4 shows a system incorporating a number of different self-cleaning elements of the present invention.

As a general feature of the invention, the system may include a feed conveyor 50 comprising a belt 51 (e.g. driven between a rotatable drum 52). Belt 51 is thereby arranged to have an upper belt portion 53, presenting a belt surface 54 for transporting a material 55 in the direction of output drum 52 whereupon the material 55 falls from the belt 51 into a hopper or chute 60 as belt 51 turns over output drum 52 and returns, as a lower belt portion 61, towards the first rotatable drum.

The system may include drive means, suitably in the form of a motor (not shown in Figure 4), to propel belt 51 over the drums.

As described above, bulk material 55 is ejected from the belt 51 into a chute 60. Chute 60 is of the type shown in Figures 2 and 3 and includes a flexible liner 64 within a frame 65 (not shown in detail). The chute 60 is provided with a series, as required, of pneumatic or hydraulic linear actuators 70, or other actuators, acting against liner 64.

The system further includes a rotatable drum system 71 of the type described above with respect to the embodiment of Figure 1.

In this example, the rotating drum 72 is mounted on four support wheels 73, which are either driven directly or as shown, via a belt or chain system including a circumferential chain 74 driven by an electric or hydraulic motor 75. The drum 72 has an axis of rotation which is arranged to be inclined to the horizontal by between 0° and about 30° to control a residence time for material within the drum 72. The system may include an adjustment mechanism to allow for adjustment of the inclination angle in use. Agitator or tensioning arms 76 are pivotally mounted above drum 71 and each is fitted with a wheel or roller 80 to act upon the flexible liner 81, as described above, to induce deflection. In this embodiment, arms 76 are mounted to a supporting frame 82 for the drum system 71 with a simple pivot or hinge mount. As drum 72 rotates, longitudinal ribs 83 pass under wheels 80 and lift each wheel 80 and associated arm 76, as ribs 83 move away from the agitator arms, each arm and its associated wheel falls under gravity against liner 81, thereby dislodging any material adhered to the inner surface of the liner.

Processed material 84 is ejected from drum system 71.

In general, and by way of example, in an apparatus of the invention is for granulating materials (e.g. heavy bulk minerals), such as those with a loose bulk density of 1000-1200 kg/m³.

The drum may have a diameter of at least 1.0 m, preferably at least 1.5 m.

Typically, the length of the drum is at least 2.0 m, preferably at least 3.0 m, more preferably at least 4.5 m.

In general, the liner is a sheet. Preferably, the sheet has a thickness of from 5 mm to 25 mm, more preferably 10 mm to 20 mm (e.g. about 15 mm). It is preferred that the sheet is a rubber sheet.

Each aperture typically has an area of about 0.5 to about 3.0 m², preferably about 1.0 to about 2.5 m².

For example, the drum may have a diameter of the order of 1.5 m and a length of 4.5 m. Each aperture may conveniently measures about 1.5 m by 1.2 m and the liner is suitably made from 15 mm thick rubber sheet.

The specific design of the device for a given application will take account of fundamental engineering principles for material handling. The support frame must be of sufficient structural integrity to support the mass of material being handled. Aperture size and position in the support frame is dictated by the thickness of the liner used. In turn, the liner thickness is determined by the bulk density of the material. Thus, in an empirical sense, for a material with a high bulk density, a thicker liner with a larger aperture, or a thinner liner with a smaller aperture may be used. A calculation that factors the aperture dimensions, liner thickness, and Shore Hardness and/or Young's Modulus for the liner material can be applied to ensure that the liner does not deform excessively under its expected normal load. The same calculation can be applied to determine any necessary additional force required to deform the liner to facilitate cleaning. The additional force applied should not exceed the yield strength of the liner material, thus inducing elastic deformation. The cleaning action is achieved by delamination or fracture of the adhering material. Therefore, the flexural or shear strength of the material needs to be calculated to ascertain the degree of elastic deformation required.

## Claims

1. A material handling system (71) comprising a rigid frame (11) and a moveable liner (12), wherein the rigid frame (11) is in the form of a rotatable drum (10, 72) and the moveable liner (12) is fixed to the frame (11) to prevent slipping, and the moveable liner (12) provides a continuous surface for transporting or handling a material, wherein the frame (11) includes at least one aperture (13) having an area and wherein the system comprises an actuator (31) system for applying a force to a surface of the liner in the area of the aperture, **characterized in that** the actuator system (31) comprises a rotatable shaft (32) having at least one actuator arm (40) mounted radially thereto, wherein the or each actuator arm (40, 76) is arranged to bear against the moveable liner (12), and wherein the system includes an inclination adjustment system for adjusting an angle of the rigid frame (11) and/or the moveable liner (12) to the ground.

2. The material handling system (71) as claimed in claim 1, wherein the moveable liner (12) either (a) is a flexible liner, optionally an elastomeric or rubber liner, or (b) comprises a rigid or resilient member flexibly or elastically mounted to the frame.

3. The material handling system (71) as claimed in any preceding claim, wherein the moveable liner (12) is not a mesh.

4. The material handling system (71) as claimed in any preceding claim wherein the actuator system (31) is configured to apply a force to the liner.

5. The material handling system (71) as claimed in claim 4, wherein the actuator system (31) is configured to apply a force to the liner(12) externally of the rigid frame (11).

6. The material handling system (71) as claimed in claim 4 or claim 5, wherein the force applied to the liner (12) is substantially perpendicular to a surface of the liner (12).

7. The material handling system (71) as claimed in any one of claims 4 to 6, wherein the force applied to the liner (12) is a tapping force.

8. The material handling system (71) as claimed in any preceding claim, wherein the rotatable drum (10, 72) has a longitudinal axis of rotation, and the axis of rotation is inclined to the horizontal at an angle of from 0° to about 30°.

9. The material handling system (71) as claimed in any one of claims 1 to 8 further comprising a prime mover for rotating the rotatable shaft, optionally an electric, pneumatic, or hydraulic motor; optionally further comprising at least one of a belt drive, chain drive and gearing assembly.

10. The material handling system (71) as claimed in any one of the preceding claims wherein the actuator system (31) comprises at least one actuator arm (40, 76) pivotally mounted adjacent an area of an aperture (13).

11. The material handling system (71) as claimed in any one of claims 1 to 10, wherein the or each arm (40, 76) comprises a distally-mounted wheel or roller (80).

12. The material handling system (71) as claimed in any one of claims 1 to 11, wherein at least one of the or each arms (40, 76) is cranked.

13. The material handling system (71) as claimed in any preceding claim further comprising load cells for weighing material in or passing through the system (71).

14. A method of handling and/or transporting a material with a material handling system (71) as defined in any one of claims 1 to 13, wherein the method comprises:
(i) depositing the material onto a surface of a moveable liner (12); and
(ii) applying a force to a surface of the moveable liner (12) to reduce or prevent accumulation of the material on the surface of the moveable liner (12).

15. A process for the preparation of one or more pellets using a material handling system (71) as defined in any one of claims 1 to 13, wherein the process comprises: mixing fine particulates and a binder in a rotatable drum (10, 72) of the material handling system (71) to form one or more pellets, wherein a force is applied to a surface of a moveable liner (12) of the material handling system (71) during the mixing of the fine particulates and the binder to reduce or prevent accumulation thereof on the surface of the moveable liner (12), and wherein the rigid frame (11) of the material handling system (71) is in the form of a rotatable drum (10, 72).

## Patentansprüche

1. Materialhandhabungssystem (71), umfassend einen starren Rahmen (11) und eine bewegliche Auskleidung (12), wobei der starre Rahmen (11) in der Form einer drehbaren Trommel (10, 72) vorliegt und die bewegliche Auskleidung (12) an dem Rahmen (11) befestigt ist, um Rutschen zu verhindern, und die bewegliche Auskleidung (12) eine durchgehende Oberfläche zum Transportieren oder Handhaben eines Materials bereitstellt, wobei der Rahmen (11) mindestens eine Öffnung (13) mit einem Bereich beinhaltet und wobei das System ein Aktorsystem (31) zum Anwenden einer Kraft auf eine Oberfläche der Auskleidung in dem Bereich der Öffnung umfasst, **dadurch gekennzeichnet, dass** das Aktorsystem (31) eine drehbare Welle (32) mit mindestens einem radial daran montierten Aktorarm (40) umfasst, wobei der oder jeder Aktorarm (40, 76) angeordnet ist, um gegen die bewegliche Auskleidung (12) zu wirken, und wobei das System ein Neigungsverstellsystem, zum Einstellen eines Winkels des starren Rahmens (11) und/oder der beweglichen Auskleidung (12) am Boden, beinhaltet.

2. Materialhandhabungssystem (71) nach Anspruch 1, wobei die bewegliche Auskleidung (12) entweder (a) eine flexible Auskleidung, optional eine Elastomer- oder Kautschukauskleidung ist, oder (b) ein starres oder elastisches Element umfasst, das flexibel oder elastisch an dem Rahmen montiert ist.

3. Materialhandhabungssystem (71) nach einem vorhergehenden Anspruch, wobei die bewegliche Auskleidung (12) kein Netz ist.

4. Materialhandhabungssystem (71) nach einem vorhergehenden Anspruch, wobei das Aktorsystem (31) dazu konfiguriert ist, eine Kraft auf die Auskleidung anzuwenden.

5. Materialhandhabungssystem (71) nach Anspruch 4, wobei das Aktorsystem (31) dazu konfiguriert ist, eine Kraft auf die Auskleidung (12) außerhalb des starren Rahmens (11) anzuwenden.

6. Materialhandhabungssystem (71) nach Anspruch 4 oder Anspruch 5, wobei die auf die Auskleidung (12) angewendete Kraft im Wesentlichen senkrecht zu einer Oberfläche der Auskleidung (12) ist.

7. Materialhandhabungssystem (71) nach einem der Ansprüche 4 bis 6, wobei die auf die Auskleidung (12) angewendete Kraft eine Klopfkraft ist.

8. Materialhandhabungssystem (71) nach einem vorhergehenden Anspruch, wobei die drehbare Trommel (10, 72) eine Längsdrehachse aufweist und die Drehachse in einem Winkel von 0° bis etwa 30° zur Horizontalen geneigt ist.

9. Materialhandhabungssystem (71) nach einem der Ansprüche 1 bis 8, ferner umfassend einen Hauptantrieb zum Drehen der drehbaren Welle, optional einen elektrischen, pneumatischen oder hydraulischen Motor; ferner optional umfassend mindestens eines von einem Riemenantrieb, einem Kettenantrieb und einer Getriebeanordnung.

10. Materialhandhabungssystem (71) nach einem der vorhergehenden Ansprüche, wobei das Aktorsystem (31) mindestens einen Aktorarm (40, 76) umfasst, der schwenkbar an einen Bereich einer Öffnung (13) angrenzend montiert ist.

11. Materialhandhabungssystem (71) nach einem der Ansprüche 1 bis 10, wobei der oder jeder Arm (40, 76) ein(e) distal montierte(s) Rad oder Rolle (80) umfasst.

12. Materialhandhabungssystem (71) nach einem der Ansprüche 1 bis 11, wobei mindestens einer des oder jedes Arms (40, 76) gekröpft ist.

13. Materialhandhabungssystem (71) nach einem vorhergehenden Anspruch, ferner umfassend Lastzellen zum Wägen von Material, das sich in dem System (71) befindet oder es durchläuft.

14. Verfahren zum Handhaben und/oder Transportieren eines Materials mit einem Materialhandhabungssystem (71) wie in einem der Ansprüche 1 bis 13 definiert, wobei das Verfahren Folgendes umfasst:
(i) Abscheiden des Materials auf eine Oberfläche einer beweglichen Auskleidung (12); und
(ii) Anwenden einer Kraft auf eine Oberfläche der beweglichen Auskleidung (12), um Ansammlung des Materials auf der Oberfläche der beweglichen Auskleidung (12) zu reduzieren oder zu verhindern.

15. Verfahren zur Herstellung eines oder mehrerer Pellets unter Verwendung eines Materialhandhabungssystems (71) wie in einem der Ansprüche 1 bis 13 definiert, wobei das Verfahren Folgendes umfasst:
Mischen von Feinpartikeln und einem Bindemittel in einer drehbaren Trommel (10, 72) des Materialhandhabungssystems (71), um ein oder mehrere Pellets zu bilden, wobei eine Kraft auf eine Oberfläche einer beweglichen Auskleidung (12) des Materialhandhabungssystems (71) während des Mischens der Feinpartikel und des Bindemittels angewendet wird, um eine Ansammlung davon auf der Oberfläche der beweglichen Auskleidung (12) zu reduzieren oder zu verhindern, und wobei der starre Rahmen (11) des Materialhandhabungssystems (71) in der Form einer drehbaren Trommel (10, 72) vorliegt.

## Revendications

1. Système de manipulation de matériau (71) comprenant un cadre rigide (11) et un habillage mobile (12), le cadre rigide (11) se présentant sous la forme d'un tambour rotatif (10, 72) et l'habillage mobile (12) étant fixé au cadre (11) pour empêcher un glissement, et l'habillage mobile (12) assurant une surface continue pour le transport ou la manipulation d'un matériau, le cadre (11) comprenant au moins une ouverture (13) comportant une zone et le système comprenant un système actionneur (31) pour appliquer une force à une surface de l'habillage dans la zone de l'ouverture, **caractérisé en ce que** le système actionneur (31) comprend un arbre rotatif (32) comportant au moins un bras actionneur (40) monté radialement sur celui-ci, le ou chaque bras actionneur (40, 76) étant agencé pour s'appuyer contre l'habillage mobile (12), et le système comprenant un système de réglage d'inclinaison pour régler un angle du cadre rigide (11) et/ou de l'habillage mobile (12) par rapport au sol.

2. Système de manipulation de matériau (71) selon la revendication 1, ledit habillage mobile (12) soit (a) étant un habillage flexible, éventuellement un habillage en élastomère ou en caoutchouc, soit (b) comprenant un élément rigide ou élastique monté flexible ou élastique sur le cadre.

3. Système de manipulation de matériau (71) selon l'une quelconque des revendications précédentes, ledit habillage mobile (12) n'étant pas une maille.

4. Système de manipulation de matériau (71) selon l'une quelconque des revendications précédentes, ledit système actionneur (31) étant configuré pour appliquer une force sur l'habillage.

5. Système de manipulation de matériau (71) selon la revendication 4, ledit système actionneur (31) étant configuré pour appliquer une force sur l'habillage (12) à l'extérieur du cadre rigide (11).

6. Système de manipulation de matériau (71) selon la revendication 4 ou 5, ladite force appliquée sur l'habillage (12) étant sensiblement perpendiculaire à une surface de l'habillage (12).

7. Système de manipulation de matériau (71) selon l'une quelconque des revendications 4 à 6, ladite force appliquée sur l'habillage (12) étant une force de taraudage.

8. Système de manipulation de matériau (71) selon l'une quelconque des revendications précédentes, ledit tambour rotatif (10, 72) comportant un axe de rotation longitudinal, ledit axe de rotation étant incliné par rapport à l'horizontale selon un angle compris entre 0° et environ 30°.

9. Système de manipulation de matériau (71) selon l'une quelconque des revendications 1 à 8, comprenant en outre un moteur d'entraînement permettant de faire tourner l'arbre rotatif, éventuellement un moteur électrique, pneumatique ou hydraulique ; éventuellement comprenant en outre au moins un élément parmi un entraînement par courroie, un entraînement par chaîne et un ensemble engrenage.

10. Système de manipulation de matériau (71) selon l'une quelconque des revendications précédentes, ledit système actionneur (31) comprenant au moins un bras actionneur (40, 76) monté pivotant adjacent à une zone d'une ouverture (13).

11. Système de manipulation de matériau (71) selon l'une quelconque des revendications 1 à 10, ledit ou chaque bras (40, 76) comprenant une roue ou un rouleau (80) monté distalement.

12. Système de manipulation de matériau (71) selon l'une quelconque des revendications 1 à 11, au moins un dudit ou de chaque bras (40, 76) étant coudé.

13. Système de manipulation de matériau (71) selon l'une quelconque des revendications précédentes, comprenant en outre des cellules de charge permettant de peser le matériau dans le système (71) ou passant par celui-ci.

14. Procédé de manipulation et/ou de transport d'un matériau avec un système de manipulation de matériau (71) selon l'une quelconque des revendications 1 à 13, ledit procédé comprenant :
(i) le dépôt du matériau sur une surface d'un habillage mobile (12) ; et
(ii) l'application d'une force sur une surface de l'habillage mobile (12) pour réduire ou empêcher l'accumulation du matériau sur la surface de l'habillage mobile (12).

15. Procédé permettant la préparation d'une ou plusieurs pastilles au moyen d'un système de manipulation de matériau (71) selon l'une quelconque des revendications 1 à 13, ledit procédé comprenant : le mélange de particules fines et d'un liant dans un tambour rotatif (10, 72) du système de manipulation de matériau (71) pour former une ou plusieurs pastilles, une force étant appliquée sur une surface d'un habillage mobile (12) du système de manipulation de matériau (71) pendant le mélange des particules fines et du liant pour réduire ou empêcher leur accumulation sur la surface de l'habillage mobile (12), et le cadre rigide (11) du système de manipulation de matériau (71) se présentant sous la forme d'un tambour rotatif (10, 72).
